# EUROPÄISCHE PATENTSCHRIFT

(11) **EP 2 389 715 B1**
(45) Veröffentlichungstag und Bekanntmachung des Hinweises auf die Patenterteilung: **13.07.2016**
(21) Anmeldenummer: 10704112.1
(22) Anmeldetag: 14.01.2010
(51) Int. Cl.: H02M 1/00, H02J 7/00

(54) **SERIENSCHALTUNG VON SCHALTREGLERN ZUR ENERGIEÜBERTRAGUNG IN BATTERIESYSTEMEN**
SERIES CONNECTION OF ON-OFF CONTROLLERS FOR POWER TRANSMISSION IN BATTERY SYSTEMS
MONTAGE EN SÉRIE DE RÉGULATEURS À DÉCOUPAGE POUR LE TRANSPORT D'ÉNERGIE DANS DES SYSTÈMES DE BATTERIE

(30) Priorität: 20.01.2009 DE 102009000323
(43) Veröffentlichungstag der Anmeldung: 30.11.2011
(73) Patentinhaber: Robert Bosch GmbH, 70442 Stuttgart (DE)
(72) Erfinder: BUTZMANN, Stefan, 71717 Beilstein (DE)
(86) Internationale Anmeldenummer: PCT/EP2010/050376
(87) Internationale Veröffentlichungsnummer: WO 2010/084069

(56) Entgegenhaltungen:
- US-A- 4 253 137
- US-A1- 2007 139 012
- US-A1- 2007 236 173
- US-A1- 2008 042 493
- US-B1- 6 208 039
- US-B1- 6 232 749

## Beschreibung

### Stand der Technik

Es besteht ein wachsender Bedarf nach Batteriesystemen, welche in stationären Anwendungen wie Windkraftanlagen und Notstromsystemen oder aber in Fahrzeugen zum Einsatz kommen sollen. Alle diese Anforderungen stellen hohe Anforderungen an die Zuverlässigkeit und Ausfallsicherheit. Der Grund hierfür ist, dass ein vollständiger Ausfall der Spannungsversorgung durch das Batteriesystem zu einem Ausfall des Gesamtsystems führen kann. So werden bei Windkraftanlagen Batterien eingesetzt, um bei starkem Wind die Rotorblätter zu verstellen und die Anlage so vor übermäßigen mechanischen Belastungen zu schützen, die die Windkraftanlage beschädigen oder sogar zerstören können. Im Falle des Ausfalls der Batterie eines Elektroautos würde dieses fahruntüchtig. Ein Notstromsystem wiederum soll gerade den unterbrechungsfreien Betrieb z.B. eines Krankenhauses sicherstellen und daher selbst möglich nicht ausfallen können.

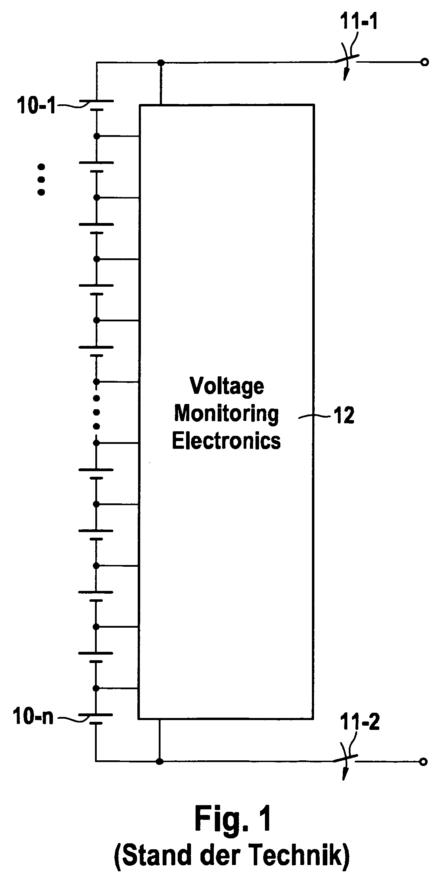

Um die für die jeweilige Anwendung geforderte Leistung und Energie zur Verfügung stellen zu können, werden einzelne Batteriezellen in Serie und teilweise zusätzlich parallel geschaltet. Fig. 1 zeigt ein Prinzipschaltbild für eine Serienschaltung von Batterien. Eine Vielzahl von Batteriezellen 10-1 bis 10-n sind in Serie geschaltet, um die beispielsweise in einem PKW für den Elektromotor erforderliche hohe Betriebsspannung durch Summierung der Spannung der Einzelzellen 10-1,...,10-n zu erreichen. Die hohe Betriebsspannung kann durch ausgangsseitige Schalter 11-1 und 11-2 von den folgenden, nicht dargestellten leistungselektronischen Bauelementen wie Wechselrichtern abgekoppelt werden. Da der gesamte Ausgangsstrom der Batterie aufgrund der Serienschaltung der Batteriezellen 10-1,...,10-n in jeder der Batteriezellen 10-1,...,10-n fließt, wobei der Ladungstransport durch elektrochemikalische Prozesse innerhalb der Batteriezellen 10-1,...,10-n geschieht, bedeutet der Ausfall einer einzigen Batteriezelle im Extremfall, dass die Gesamtanordnung keinen Strom und damit keine elektrische Energie mehr bereitstellen kann. Um einen drohenden Ausfall einer Batteriezelle 10-1,...,10-n rechtzeitig erkennen zu können, wird gewöhnlich ein sog. Batterie-Managementsystem 12 verwendet, welches mit beiden Polen jeder der Batteriezellen 10-1,...,10-n verbunden oder verbindbar ist und in regelmäßigen oder wählbaren Abständen Betriebsparameter wie Spannung und Temperatur jeder Batteriezelle 10-1,...,10-n und daraus deren Ladezustand (State of Charge, SoC) bestimmt. Dies bedeutet einen hohen Aufwand bei gleichzeitig geringer Flexibilität der elektrischen Betriebsdaten des Batteriesystems.

Weitere Nachteile der Serienschaltung einer Vielzahl von Batteriezellen sind:
1. Für unterschiedliche Betriebszustände der mit der Batterie zu betreibenden Einrichtung werden Bedingungen für die bereitzustellende Betriebsspannung, den maximalen Strom und die gespeicherte Energie gestellt, welche sich nur dann vereinen lassen, wenn eine höhere Zahl von Batteriezellen gekoppelt wird, als zur Erfüllung der Anforderungen eigentlich notwendig wäre. Dies erhöht den Preis und das insbesondere bei einem Elektroauto störende Gewicht und Volumen des Batteriesystems.
2. Die Montage der Batterie, also das Zusammenschalten der einzelnen Zellen, erfolgt wegen der durch die Serienschaltung summierten Spannungen der einzelnen Batteriezellen bei hohen Spannungen bis 1000 V, weshalb ein Austausch der Batterie, einzelner Zellen oder Module nicht in örtlichen Werkstätten bzw. im Falle einer stationären Anwendung nur mit Spezialwerkzeug von besonders ausgebildeten Fachkräften vorgenommen werden kann. Dadurch ergibt sich ein hoher logistischer Aufwand für die Wartung von Batteriesystemen im Fehlerfall.
3. Um das Batteriesystem spannungsfrei zu schalten, d.h. die eigentliche Batterie von der Last zu trennen, müssen Leistungsschalter 11-1 und 11-2 vorgesehen werden, welche typischerweise als Schütze ausgeführt und welche für die zu erwartenden hohen Ströme und Spannungen sehr teuer sind.

In der Druckschrift US 2008/0042493 A1 wird ein Batteriesystem beschrieben, dass eine Mehrzahl von DC/DC-Umsetzern umfasst, die ausgangsseitig in Serie geschaltet sind. Das Batteriesystem verfügt über eine Steuereinheit, um die einzelnen DC/DC-Umsetzer zu steuern. Dabei sind die DC/DC-Umsetzer eingangsseitig jeweils mit einer Batterie verbunden.

### Offenbarung der Erfindung

Die Erfindung macht es sich zur Aufgabe, eine Vorrichtung einzuführen, die die obengenannten Nachteile des Standes der Technik überwinden kann.

Die Erfindung ist durch die Merkmale des unabhängigen Anspruchs definiert, wobei weitere mögliche Ausführungsformen in den abhängigen Ansprüchen definiert sind.

Ein erster Aspekt der Erfindung betrifft einen Energieübertrager für ein Batteriesystem, der eine Mehrzahl von DC/DC-Umsetzern mit jeweils einem ersten und einem zweiten Eingang und einem ersten und einem zweiten Ausgang umfasst. Die ersten und zweiten Eingänge der DC/DC-Umsetzer sind für das Anschließen eines Batteriemoduls ausgebildet. Die DC/DC-Umsetzer sind ausgangsseitig in Serie geschaltet.

Die Erfindung besitzt den Vorteil, dass primärseitig eine Vielzahl von Batteriemodulen parallelgeschaltet werden können, welche jeweils eine bedeutend geringere Klemmspannung aufweisen als eine Serienschaltung der Batteriemodule. Daher liegt an keinem primärseitigen Anschluss - also an keinem der ersten und zweiten Eingänge der DC/DC-Umsetzer- eine Spannung an, die einen besonderen Umgang mit der Batterie beim Austausch einzelner Batteriemodule oder Batteriezellen erforderlich machen würde. Indem die Ausgänge der DC/DC-Umsetzer jedoch in Reihe geschaltet sind, ergibt sich ausgangsseitig eine gewünschte hohe Gesamtspannung als Summe der von den einzelnen DC/DC-Umsetzern erzeugten Ausgangsspannungen. Die Vorrichtung erlaubt zudem die Wahl einer je nach Betriebssituation geeigneten Gesamtspannung, da die Ausgangsspannung der einzelnen DC/DC-Umsetzer nach bekannter Art eingestellt werden kann. Außerdem wird die Ausgangsspannung unabhängig von der Zahl der primärseitig angeschlossenen Batteriezellen. Dadurch kann die Auslegung des Batteriesystems rein nach Energie- und Leistungskriterien unabhängig von der für die jeweilige Anwendung geforderten Gesamtspannung erfolgen. Ein weiterer Vorteil besteht darin, dass die teuren Schütze 11-1 und 11-2 entfallen können, weil die Hochspannung am Batterieausgang durch Abschalten der DC/DC-Umsetzer auf einfache Weise abgeschaltet werden kann.

Bevorzugt verfügen die DC/DC-Umsetzer über eine erste Spule. Besonders bevorzugt verfügen die die DC/DC-Umsetzer über eine zweite Spule, welche mit der ersten Spule des DC/DC-Umsetzers zu einem Leistungsübertrager oder Speichertransformator gekoppelt ist. Diese Ausführungsvariante von DC/DC-Umsetzern ermöglicht eine galvanische Abkopplung der Ausgänge des DC/DC-Umsetzers von dessen Eingängen, so dass eine Serienschaltung der Ausgänge der DC/DC-Umsetzer einfach möglich ist.

Die DC/DC-Umsetzer können als Flyback-Konverter ausgeführt sein, aber auch andere Konfigurationen wie Forward-Konverter, Push-Pull-Konverter, Half-Bridge-Konverter und Full-Bridge-Konverter wie auch Resonanzwandlerprinzipien sind mögliche Varianten.

Bei einer Ausführung des erfindungsgemäßen Energieübertragers sind die ersten Eingänge der DC/DC-Umsetzer mit einer Masse verbunden.

Besonders bevorzugt wird eine Ausführungsvariante, bei der die ersten und zweiten Ausgänge eines jeden DC/DC-Umsetzers mit einer in Sperrrichtung geschalteten Freilaufdiode verbunden sind. Fällt ein DC/DC-Umsetzer im Betrieb aus, etwa weil eine Batteriezelle des eingangsseitig angeschlossenen Batteriemoduls defekt ist, führt die Freilaufdiode dazu, dass der erste und der zweite Ausgang des ausgefallenen DC/DC-Umsetzers leitend miteinander verbunden werden, so dass in der Gesamtanordnung weiterhin ein Ausgangsstrom fließen kann. Diese Variante erlaubt daher neben dem Weiterbetrieb trotz des Ausfalls einer oder mehrerer Batteriezellen. Außerdem wird ggf. der Austausch eines Batteriemoduls im laufenden Betrieb möglich, ohne dass die Erzeugung der Gesamtspannung unterbrochen wird.

Alternativ verfügt jeder der DC/DC-Umsetzer über einen ersten Steuereingang für ein erstes Steuersignal und ist ausgebildet, auf den Empfang des ersten Steuersignals hin den ersten Ausgang des DC/DC-Umsetzers mit dem zweiten Ausgang des DC/DC-Umsetzers durch einen Schalter elektrisch zu verbinden.

Bei einer Fortführung der beiden letztgenannten Ausführungsvarianten verfügt jeder der DC/DC-Umsetzer über einen zweiten Steuereingang für ein zweites Steuersignal und ist ausgebildet, auf den Empfang des zweiten Steuersignals eine Spannung zwischen dem ersten und dem zweiten Ausgang des DC/DC-Umsetzers zu erhöhen. Dadurch wird es möglich, einer Senkung der Gesamtspannung durch den bereits beschriebenen Ausfall bzw. die Abschaltung eines einzelnen DC/DC-Umsetzers entgegenzuwirken, so dass weiterhin eine wenigstens näherungsweise unveränderte Gesamtspannung von der verringerten Anzahl DC/DC-Umsetzer bereitgestellt wird.

Ein zweiter Aspekt der Erfindung führt ein Batteriesystem mit einem Energieübertrager gemäß dem ersten Aspekt der Erfindung und einer Mehrzahl von Batteriemodulen ein. Die Batteriemodule verfügen jeweils über wenigstens eine Batteriezelle. Die Batteriepole der Batteriemodule sind mit einem entsprechenden Eingang der ersten und zweiten Eingänge eines DC/DC-Umsetzer des Energieübertragers lösbar verbunden.

Ein dritter Aspekt der Erfindung betrifft ein Kraftfahrzeug mit einem Batteriesystem gemäß dem zweiten Aspekt der Erfindung.

### Kurzbeschreibung der Abbildungen

Die Erfindung wird im folgenden anhand von Abbildungen von Ausführungsbeispielen näher erläutert. Es zeigen:
Fig. 1 eine Batterie mit Batteriemanagementsystem nach dem Stand der Technik;
Fig. 2 ein erstes Ausführungsbeispiel der Erfindung;
Fig. 3 ein zweites Ausführungsbeispiel der Erfindung; und
Fig. 4 ein Schaltbild eines DC/DC-Umsetzers mit Speichertransformator.

### Ausführliche Beschreibung der Abbildungen

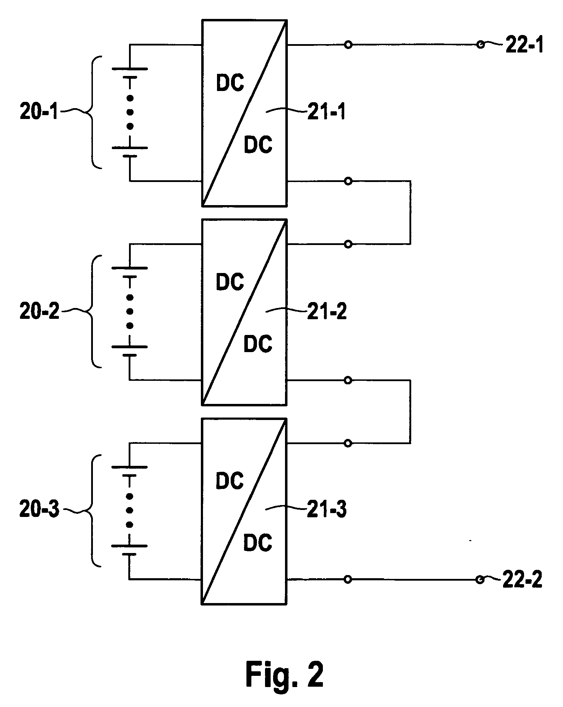

Fig. 2 zeigt ein erstes Ausführungsbeispiel der Erfindung. Im Beispiel sind drei DC/DC-Umsetzer 21-1, 21-2 und 21-3 zu sehen, in realen Anwendungen kann deren Zahl jedoch deutlich höher liegen. Jeder der DC/DC-Umsetzer 21-1, 21-2, 21-3 ist eingangsseitig mit einem Batteriemodul 20-1, 20-2, 20-3 verbunden, welche im Beispiel jeweils eine Mehrzahl von in Serie geschalteten Batteriezellen aufweisen. Wie in Fig. 2 zu sehen, werden erfindungsgemäß die Ausgänge der DC/DC-Umsetzer 21-1, 21-2, 21-3 in Serie geschaltet, so dass sich die Gesamtspannung zwischen den Ausgängen 22-1 und 22-2 der Anordnung als Summe der von den DC/DC-Umsetzern 21-1, 21-2, 21-3 erzeugten Einzelspannungen ergibt. Die DC/DC-Umsetzer 21-1, 21-2, 21-3 sind in bekannter Weise aufgebaut und erlauben ein Einstellen der an den ersten und zweiten Ausgängen eines jeden DC/DC-Umsetzers 21-1, 21-2, 21-3 anliegenden Ausgangsspannung oder auch das Abschalten der DC/DC-Umsetzer 21-1, 21-2, 21-3, so dass keine DC/DC-Umsetzung mehr stattfindet. Dadurch kann die Gesamtspannung an den Ausgängen 22-1 und 22-2 flexibel an die jeweilige Betriebssituation angepasst werden, was einen der Vorteile der Erfindung darstellt.

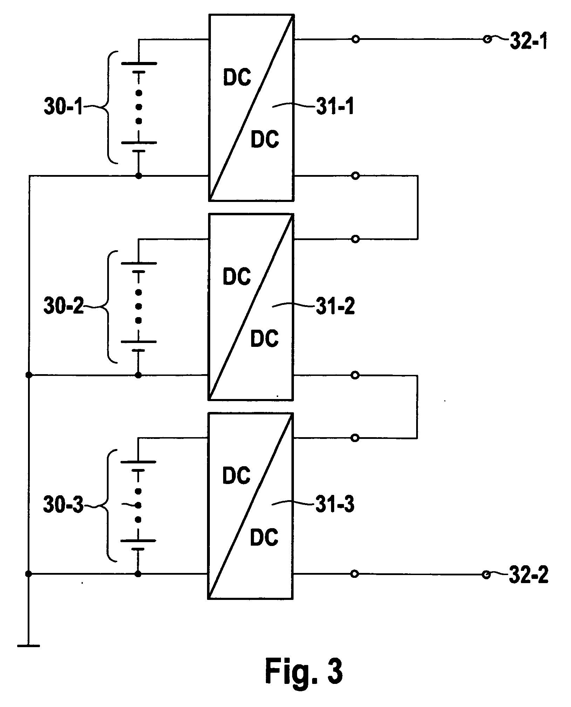

Fig. 3 zeigt ein zweites Ausführungsbeispiel der Erfindung, das im wesentlichen dem ersten Ausführungsbeispiel entspricht. Wiederum sind mehrere DC/DC-Umsetzer 31-1, 31-2, 31-3, deren Eingänge mit Batteriemodulen 30-1, 30-2, 30-3 verbunden sind, ausgangsseitig in Serie geschaltet, um eine hohe Gesamtspannung an den Ausgängen 32-1 und 32-2 der Anordnung zur Verfügung zu stellen. Als Unterschied zum ersten Ausführungsbeispiel sind die ersten Eingänge der DC/DC-Umsetzer 31-1, 31-2, 31-3 miteinander und mit Masse verbunden.

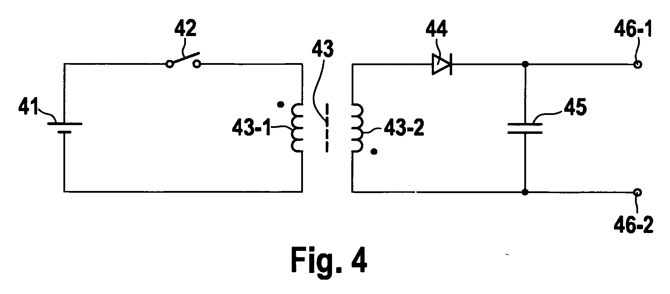

Fig. 4 zeigt ein Schaltbild eines bekannten DC/DC-Umsetzers mit Speichertransformator 43. Eine Gleichspannungsquelle 41, welche im Fall der Erfindung einem Batteriemodul entspricht, wird über einen Schalter 42 periodisch mit einer Primärspule 43-1 eines Speichertransformators 43 verbunden und wieder abgekoppelt. Wenn die Gleichspannungsquelle 41 mit der Primärspule 43-1 verbunden ist, fließt ein Strom durch die Primärspule 43-1, welcher zum Aufbau eines Magnetfeldes im Speichertransformator 43 führt. Wenn der Schalter 42 wieder geöffnet wird, gibt das Magnetfeld die in ihm gespeicherte Energie über die Sekundärspule 43-2 des Speichertransformators 43 ab. Der auf diese Weise erzeugte Ausgangsstrom lädt über die Diode 44 einen Pufferkondensator 45 auf, welcher den durch die Taktung des Schalters 42 stoßartig fließenden Ausgangsstrom zwischenspeichert und glättet. An den ersten und zweiten Ausgängen 46-1 und 46-2 entsteht eine Ausgangsspannung, die außer von der Kapazität des Pufferkondensators 45 auch von der Taktung des Schalters 42 abhängig ist. Der DC/DC-Umsetzer kann über eine zwischen dem ersten Ausgang 46-1 und dem zweiten Ausgang 46-2 in Sperrrichtung geschaltete Freilaufdiode besitzen, welche in der Abbildung nicht dargestellt ist. Diese Freilaufdiode erlaubt bei der erfindungsgemäßen Serienschaltung von DC/DC-Umsetzern einen Weiterbetrieb des Energieübertragers im Falle des Ausfalls eines DC/DC-Umsetzers, weil sie automatisch die Ausgänge des ausgefallenen DC/DC-Umsetzers kurzschließt und somit weiterhin das Fließen von Strom im Energieübertrager erlaubt.

Bekannte DC/DC-Umsetzer verfügen über einen Kontroller, der die Taktung des Schalters 42 an die Betriebssituation anpasst. Auch ist es üblich, dass eine Rückkopplung vorgesehen wird, bei der die an den Ausgängen 46-1, 46-2 anliegende Ausgangsspannung bestimmt und zur Anpassung der Taktung des Schalters 42 verwendet wird, so dass sich eine möglichst stabile Ausgangsspannung ergibt. Im Rahmen der Erfindung erlauben diese Eigenschaften von DC/DC-Umsetzern die Einstellung einer je nach Betriebssituation gewünschten Gesamtspannung der erfindungsgemäßen Anordnung oder auch das Abschalten eines oder aller DC/DC-Umsetzer.

Ein wichtiger Vorteil der in Fig. 4 abgebildeten Ausführungsform eines DC/DC-Umsetzers ist die galvanische Entkopplung der Eingangsspannung der Gleichspannungsquelle 41 von der Ausgangsspannung an den Ausgängen 46-1, 46-2, welche die erfindungsgemäße Serienschaltung der Ausgänge der DC/DC-Umsetzer ermöglicht. Auch andere bekannte DC/DC-Umsetzer, die diesen Vorteil bieten, sind für die Realisierung der Erfindung geeignet.

## Patentansprüche

1. Ein Energieübertrager für ein Batteriesystem, der Energieübertrager umfassend eine Mehrzahl von DC/DC-Umsetzern (31-1, 31-2, 31-3) mit jeweils einem ersten und einem zweiten Eingang und einem ersten und einem zweiten Ausgang (46-1, 46-2), wobei die ersten und zweiten Eingänge für das Anschließen eines Batteriemoduls (30-1, 30-2, 30-3) ausgebildet sind, und wobei die DC/DC-Umsetzer (31-1, 31-2, 31-3) ausgangsseitig in Serie geschaltet sind, und wobei jeder der DC/DC-Umsetzer (31-1, 31-2,31-3) über einen ersten Steuereingang für ein erstes Steuersignal verfügt und ausgebildet ist, auf den Empfang des ersten Steuersignals hin den ersten Ausgang (46-1) des DC/DC-Umsetzers (31-1, 31-2, 31-3) mit dem zweiten Ausgang (46-2) des DC/DC-Umsetzers (31-1, 31-2, 31-3) elektrisch zu verbinden, **dadurch gekennzeichnet,**
**dass** jeder der DC/DC-Umsetzer (31-1, 31-2, 31-3) über einen zweiten Steuereingang für ein zweites Steuersignal verfügt und ausgebildet ist, auf den Empfang des zweiten Steuersignals hin eine Spannung zwischen dem ersten und dem zweiten Ausgang (46-1, 46-2) des DC/DC-Umsetzers (31-1, 31-2, 31-3) zu erhöhen, sowie dass die ersten Eingänge der DC/DC-Umsetzer mit einer Masse verbunden sind.

2. Der Energieübertrager von Anspruch 1, bei dem die DC/DC-Umsetzer (31-1, 31-2, 31-3) jeweils über eine erste Spule (43-1) verfügen.

3. Der Energieübertrager von Anspruch 2, bei dem die DC/DC-Umsetzer (31-1, 31-2, 31-3) über eine zweite Spule (43-2) verfügen, welche mit der ersten Spule (43-1) des DC/DC-Umsetzers (31-1, 31-2, 31-3) zu einem Leistungsübertrager oder Speichertransformator (43) gekoppelt ist.

4. Der Energieübertrager von einem der Ansprüche 2 oder 3, bei dem die DC/DC-Umsetzer (31-1, 31-2, 31-3) als Flyback-Konverter, Forward-Konverter, Push-Pull-Konverter, Half-Bridge-Konverter, Full-Bridge-Konverter oder als Resonanzwandler ausgeführt sind.

5. Der Energieübertrager von einem der vorhergehenden Ansprüche, bei dem jeder der DC/DC-Umsetzer (31-1, 31-2, 31-3) über eine Freilaufdiode verfügt, wobei jeweils die Anode der Freilaufdiode mit dem zweiten Ausgang (46-2) des DC/DC-Umsetzers (31-1, 31-2, 31-3) und die Kathode der Freilaufdiode mit dem ersten Ausgang (46-1) des DC/DC-Umsetzers (31-1, 31-2, 31-3) verbunden sind.

6. Ein Batteriesystem mit einem Energieübertrager nach einem der vorhergehenden Ansprüche und einer Mehrzahl von Batteriemodulen (30-1, 30-2, 30-3), welche jeweils über wenigstens eine Batteriezelle verfügen und deren Batteriepole mit einem entsprechenden Eingang der ersten und zweiten Eingänge eines DC/DC-Umsetzer (31-1, 31-2, 31-3) des Energieübertragers lösbar verbunden sind.

7. Ein Kraftfahrzeug mit einem Batteriesystem nach Anspruch 6.

## Claims

1. Energy transmitter for a battery system, the energy transmitter comprising a plurality of DC/DC converters (31-1, 31-2, 31-3) each having a first and a second input and a first and a second output (46-1, 46-2), wherein the first and second inputs are designed for connecting a battery module (30-1, 30-2, 30-3), and wherein the DC/DC converters (31-1, 31-2, 31-3) are connected in series on the output side, and wherein each of the DC/DC converters (31-1, 31-2, 31-3) has a first control input for a first control signal and is designed, in response to receiving the first control signal, to electrically connect the first output (46-1) of the DC/DC converter (31-1, 31-2, 31-3) to the second output (46-2) of the DC/DC converter (31-1, 31-2, 31-3), **characterized**
**in that** each of the DC/DC converters (31-1, 31-2, 31-3) has a second control input for a second control signal and is designed, in response to receiving the second control signal, to increase a voltage between the first and the second output (46-1, 46-2) of the DC/DC converter (31-1, 31-2, 31-3), and in that the first inputs of the DC/DC converters are connected to earth.

2. Energy transmitter of Claim 1, wherein the DC/DC converters (31-1, 31-2, 31-3) each have a first coil (43-1).

3. Energy transmitter of Claim 2, wherein the DC/DC converters (31-1, 31-2, 31-3) have a second coil (43-2), which is coupled to the first coil (43-1) of the DC/DC converter (31-1, 31-2, 31-3) to form a power transmitter or storage transformer (43).

4. Energy transmitter of either of Claims 2 and 3, wherein the DC/DC converters (31-1, 31-2, 31-3) are embodied as flyback converters, forward converters, push-pull converters, half-bridge converters, full-bridge converters or as resonant converters.

5. Energy transmitter of any of the preceding claims, wherein each of the DC/DC converters (31-1, 31-2, 31-3) has a freewheeling diode, wherein in each case the anode of the freewheeling diode is connected to the second output (46-2) of the DC/DC converter (31-1, 31-2, 31-3) and the cathode of the freewheeling diode is connected to the first output (46-1) of the DC/DC converter (31-1, 31-2, 31-3).

6. Battery system comprising an energy transmitter according to any of the preceding claims and a plurality of battery modules (30-1, 30-2, 30-3) which each have at least one battery cell and the battery poles of which are releasably connected to a corresponding input of the first and second inputs of a DC/DC converter (31-1, 31-2, 31-3) of the energy transmitter.

7. Motor vehicle comprising a battery system according to Claim 6.

## Revendications

1. Dispositif de transmission d'énergie pour système de batterie, le dispositif de transmission d'énergie comprenant une pluralité de convertisseurs continu/continu (31-1, 31-2, 31-3) comportant chacun des première et seconde entrées, et des première et seconde sorties (46-1, 46-2), dans lequel les première et seconde entrées sont conçues pour le raccordement d'un module de batterie (30-1, 30-2, 30-3) et dans lequel les convertisseurs continu/continu (31-1, 31-2, 31-3) sont connectés en série du côté de la sortie et dans lequel chacun des convertisseurs continu/continu (31-1, 31-2, 31-3) comporte une première entrée de commande destinée à un premier signal de commande et est conçue pour connecter électriquement, à partir de la réception du premier signal de commande, la première sortie (46-1) du convertisseur continu/continu (31-1, 31-2, 31-3) à la seconde sortie (46-2) du convertisseur continu/continu (31-1, 31-2, 31-3), **caractérisé en ce que**
chacun des convertisseurs continu/continu (31-1, 31-2, 31-3) comporte une seconde entrée de commande destinée à un second signal de commande et est conçu pour faire croître, à partir de la réception du second signal de commande, une tension entre les première et seconde sorties (46-1, 46-2) du convertisseur continu/continu (31-1, 31-2, 31-3), et **en ce que** les premières entrées du convertisseur continu/continu sont connectées à une masse.

2. Dispositif de transmission d'énergie selon la revendication 1, dans lequel les convertisseurs continu/continu (31-1, 31-2, 31-3) comportent respectivement une première bobine (43-1).

3. Dispositif de transmission d'énergie selon la revendication 2, dans lequel les convertisseurs continu/continu (31-1, 31-2, 31-3) comportent une seconde bobine (43-2) qui est couplée à la première bobine (43-1) du convertisseur continu/continu (31-1, 31-2, 31-3) pour former un dispositif de transmission de puissance ou un transformateur accumulateur (43).

4. Dispositif de transmission d'énergie selon l'une quelconque des revendications 2 ou 3, dans lequel les convertisseurs continu/continu (31-1, 31-2, 31-3) sont réalisés sous la forme d'un convertisseur indirect, d'un convertisseur direct, d'un convertisseur symétrique, d'un convertisseur en demi-pont, d'un convertisseur en pont complet ou d'un convertisseur résonant.

5. Dispositif de transmission d'énergie selon l'une quelconque des revendications précédentes, dans lequel chacun des convertisseurs continu/continu (31-1, 31-2, 31-3) comporte une diode en roue libre, dans lequel l'anode de la diode en roue libre est connectée à la seconde sortie (46-2) du convertisseur continu/continu (31-1, 31-2, 31-3) et la cathode de la diode en roue libre est connectée à la première sortie (46-1) du convertisseur continu/continu (31-1, 31-2, 31-3), respectivement.

6. Système de batterie comportant un dispositif de transmission d'énergie selon l'une quelconque des revendications précédentes et une pluralité de modules de batterie (30-1, 30-2, 30-3) qui comportent respectivement au moins un élément de batterie et dont les pôles de batterie sont connectés de manière amovible à une entrée correspondante des première et seconde entrées d'un convertisseur continu/continu (31-1, 31-2, 31-3) du dispositif de transmission d'énergie.

7. Véhicule automobile comportant un système de batterie selon la revendication 6.
